# EUROPEAN PATENT APPLICATION

(11) **EP 2 110 299 A1**
(43) Date of publication of application: **21.10.2009**
(21) Application number: 08154792.9
(22) Date of filing: 18.04.2008
(51) Int. Cl.: B62K 25/02

(54) **Axle for a bicycle fork**

(71) Applicant: Hayes Bicycle Group, Inc., Mequon, WI 53092 (US)
(72) Inventor: Schroeder, Brady Matthew, Simi Valley, CA 93063 (US); Rathbun, James Chris, Burbank, CA 91506 (US)
(74) Representative: Fenlon, Christine Lesley

(57) **Abstract**

The present invention relates to a bicycle fork comprising an axle (100) with non-round tapered ends (35,32) affixed into dropouts (80,82) with openings (81,83) to match the axle ends (32,35) through a taper-lock affixation (10,20) for improving the torsional strength of the fork and facilitate case of the axle installation. The axle (100) consists of a first non-round end (35) with interior female threads (39) connecting an intermediate cylindrical portion (31) which connects to a second non-round tapered end (32). A tapered split non-round nut (10) having a cylindrical bolt (20) possessing male threads (27) locks the nut to the first end of the axle (35).

## Description

### BACKGROUND OF THE INVENTION

### 1. Field of the Invention

The present invention is related to an axle which is used to connect the lower sections of the leg portions of a bicycle fork in order to increase the torsional stiffness of the fork.

### 2. Description of the Prior Art

The following 10 patents and published patent applications are the closest prior art references to the present invention.
1. United States Patent No. 5,494,390 issued to Michael Gonzales on February 27, 1996 for "Quick Release Mechanism For Securing Parts To Bicycles" (hereafter the "Gonzales Patent");
2. United States Patent No. 5,531,511 issued to David K. McMurtrey et al.. and assigned to Wald Manufacturing Co., Inc. on July 2, 1996 for "Bicycle Hub Cone Nut Locking Arrangement" (hereafter the "McMurtrey Patent");
3. United States Patent No. 5,673,925 issued to Christopher R. Stewart on October 7, 1997 for "Quick Release Skewer System" (hereafter the "Stewart Patent");
4. United States Patent No. 5,997,104 issued to Valentino Campagnolo and assigned to Campagnolo S.r.l. on December 7, 1999 for "Device For Rotatably Supporting A Hub Of A Bicycle Wheel" (hereafter the "Campagnolo Patent");
5. United States Patent No. 6,059,378 issued to Michael C. Dougherty et al. and assigned to Impact Forge, Inc. on May 9, 2000 for "Taperlock Axle Apparatus And Flange" (hereafter the "Dougherty Patent");
6. United States Patent No. 6,412,803 issued to Eric E. Lalikyan et al. and assigned to Answer Products, Inc. on July 2, 2002 for "Front Fork For Cycles" (hereafter the "Lalikyan Patent");
7. United States Patent No. 6,572,199 issued to Steve W. Creek et al. and assigned to General Motors Corporation on June 3, 2003 for "Flanged Tubular Axle Shaft Assembly" (hereafter the "Creek Patent");
8. United States Patent No. 5,129,711 issued to Kun-Ten Chen on July 14, 1992 for "Bicycle Free-Wheel" (hereafter the "711 Chen Patent");
9. United States Patent No. 6,652,037 issued to Hurbert Chen and assigned to Kun Teng Industry Co., Ltd. on November 25, 2003 for "Hub And Axle Assembly For A Bicycle" (hereafter the "037 Chen Patent");
10. United States Patent No. 6,886,894 issued to Takanori Kanehisa et al. and assigned to Shimano, Inc. on May 3, 2005 for "Bicycle Hub Axle" (hereafter the "Kanehisa Patent").

The Gonzales Patent discloses a quick release mechanism for securing an axle of a bicycle to the frame. Specifically, the arms of the front fork *13* and *14* have the axle *12* extending between them. The quick release mechanism which is designated generally by the numeral *21* includes an elongated secure element *22* which extends coaxially through axle *12* and has a threaded portion *23* toward one end and an elongated head portion *24* toward the other end. The fastening element in the form of a nut *26* is mounted on the skewer to secure the hub assembly *11* to the fork upon rotation in a first direction and to release the assembly *11* from the fork upon rotation in the opposite direction. The hub secured to the fork arm *13* is clamped between nuts *26* and *19* and arm *14* is clamped between head portion *24* and *19*. This patent discusses a having a conically tapered body with an o-ring *59* mounted in the peripheral groove in the side wall thereof.

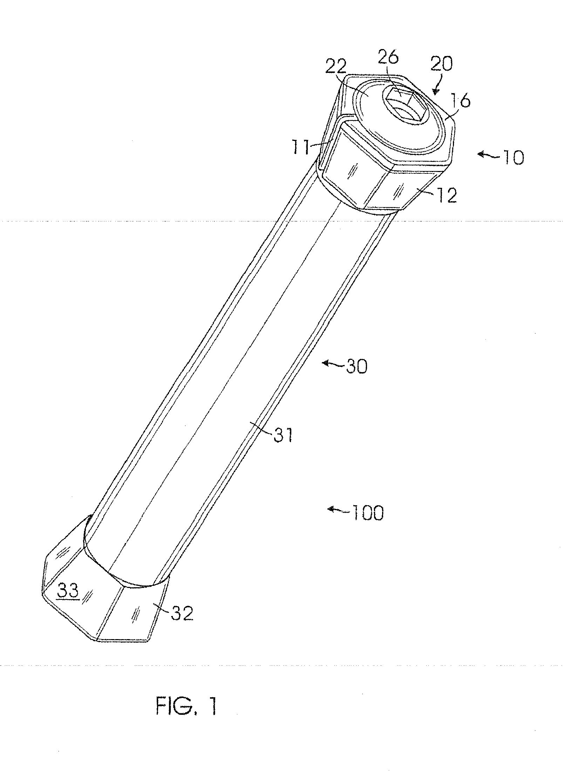

The McMurtrey Patent is a bicycle hub cone nut locking arrangement. There is a front hub assembly of a bicycle wheel having an improved cone nut locking mechanism which includes a hub body having a bore therethrough and an axle extending through the bore having threaded ends. Figure 1 shows the front hub assembly fo a bicycle wheel having the improved cone nut locking mechanism of the present invention. Hub assembly *10* includes a hub body *12* with a center section *14* and hub flanges *16* positioned at either end of the center section *14*. Hub body *1*2 has an internal bore *17* therethrough which extends through the center section 14 and through openings in each flange *16*. An axle *18* extends longitudinally through bore *17* with body *12* and extends through the flange openings and past the ends of the flange. Each flange *16* forms and outer bearing race *19* which receives circular bearing structures *20* therein. Bearing structure *20* surrounds the axle *18*. Cone nuts *22*, *24* are threaded onto the threaded ends or end sections *26*, *28*, respectively, of axle *18*. The cone nuts *22*, *24* include inner bearing races *29* which cooperate with outer bearing races *19* to hold the ball bearing structures *20* within the hub body *12* so that body *12* may rotate around axle *18*. Cone nuts *22*, *24* are threaded onto threaded ends *26*,*28* until they reach the respective first resistance portion or section *30* and second resistance portion or section *32*.

The Stewart Patent is a quick release skewer mechanism which consists of a connecting rod and an expandable retaining nut on the other end to attach the axle to the dropouts. Specifically, "Figure 1 illustrates a bicycle axle/quick release skewer system *1* consisting of a central connecting rod *2*, a lever actuated cam assembly *3* at one end of the connecting rod, and an expandable retaining nut *4* at the opposite end of the rod *2*. The midsection of retaining rod *2* is encased in a hollow center tubular shaft *5*, which includes lock nuts 6a and cone nuts *6b* at either end. The tubular shaft *5* is shorter than the connecting rod *2*, so that both ends of the connecting rod *2* protrude from the ends of the tubular shaft *5*.

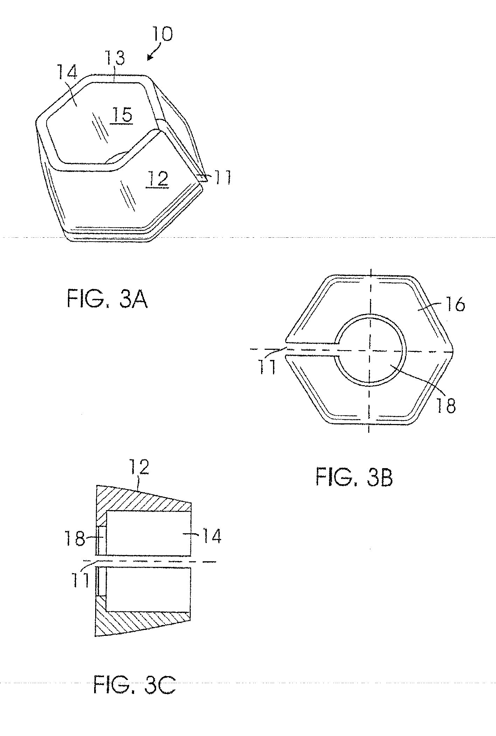

"As best illustrated in Figures 3-5, the retaining nut *4* is expandable in the axial direction. As illustrated in Figure 3, the expandable retaining nut *4* of the present invention includes a T-nut member *20* and an annular collar member *21*. The T-nut member *20* is comprised of a cylindrical body portion *22* and opposed radially extending arms *23*. The cylindrical body portion *22* includes an internal threaded channel *24* designed to threadably receive the protruding threaded end of the connecting rod *2*. Preferably, the internal threaded channel *24* is fitted with a rotation resistant device, such as a nylon insert of the type sold under the trademark "Nylock" (not shown). With such rotation resistant devices, while the T-nut can be screwed on and off the threaded connecting rod *2*, the Nylock insert prevents accidental rotation of the T-nut, such as is sometimes caused during the expansion or contraction of the retaining nut *4*.

Finally, the axle/skewer *1* must be clamped tightly and securely on the bicycle fork dropouts *8*. To do this, the operator simply pivots the cam lever *12* from position *12b* to *12a*, which returns the cap *9* from position *13b* to *13a*. With the cam assembly *3* in this position, the gaps *7a* and *7b* are returned to their original widths, causing the bicycle fork dropouts *8* to be tightly clamped between the retaining nut *4* and spacer nuts *6a*, on the other hand, and between the cam assembly *3* and spacer nut *6a* on the other hand."

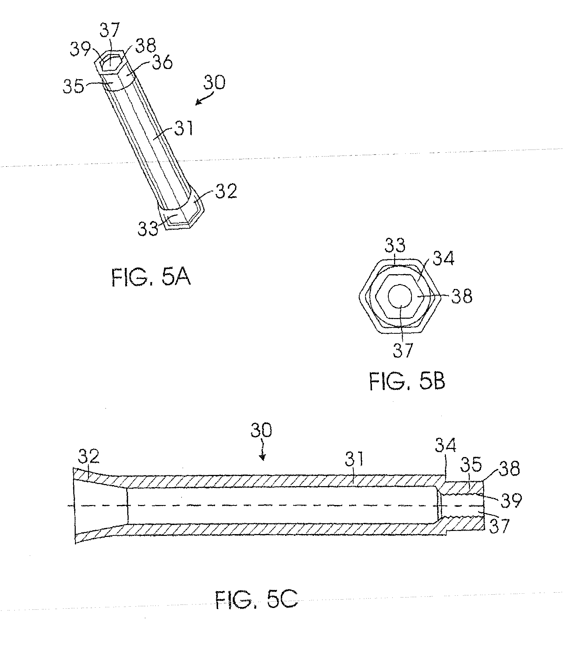

The Campagnolo Patent discloses a device for rotatably supporting a hub of a bicycle wheel on a shaft which includes at least one annular element with an outer conical surface which is pressed between the outer surface of the shaft and the inner conical surface of the inner ring of a rolling bearing. Referring to Figure 5, the hub *1* is rotatably supported on a shaft *6*. Referring to Figure 3, on one end of the shaft, there is a portion *18* having a conical surface cooperating with a corresponding conical surface *19* formed in the inner surface of the inner ring *12a* of the bearing *12*. When the conical annular element *13* is pushed up to its operative position, the axial force imparted to bearing *11* is transmitted by hub *1* to bearing *12* so that inner ring *12a* of the later engages on the conical surface *18* of the shaft *6* thus providing a safe clamping also for bearing *12*. "When ring nut *16* is screwed until it pushes the conical annular element *13* to its operative position, it can be locked in this position. To this end, the ring nut *16* has a slot *16a* and is provided with a clamping tangential screw *16b* which can be tightened to lock the ring nut *16* by friction in the reached position. Naturally, instead of this arrangement, it is possible to adopt any other clamping and locking means, such as a ring nut with an additional lock nut or a self-locking ring nut."

The Lalikyan Patent discloses an axle with non-rounded enlarged ends which attach to a corresponding non-rounded portion of a lower fork leg to prevent the two fork legs from torsionally rotating relative to each other. By making the ends of the axle a non-rounded shape, there is a better steering mechanism, which also avoids the possibility of slip between fork legs and axle. However, a drawback of the Lalikyan Patent is that non-round ends of the axle are not tapered. Further, the dropout, which accommodates the non-round ends, has a slot *48* that extends upwardly in communication with the dropout opening *40*. Therefore it is necessary for the Lalikyan Patent to have additional transverse clamping bolts *50*, which are used to tighten the bifurcated portions *22c* and *22d* of the dropout toward each other, thereby to clamp the enlarged non- round end *6a* of the axle within the dropout opening *40*.

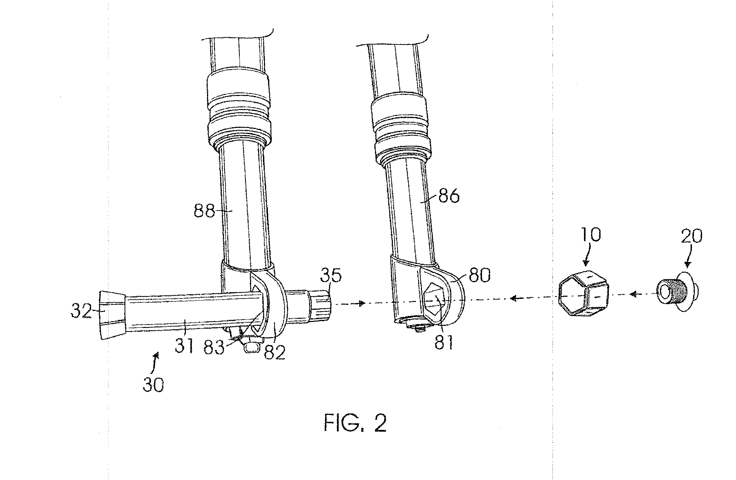

The Dougherty Patent is described as a taperlock axle apparatus and flange. This discloses "a flange and shaft for a two-piece forged axle and method for forging same. The flange includes a hub formed concentric about a longitudinal axis wherein the hub defines an inner annular face, an outer annular face, and a bore extending there between. The bore includes a first tapered surface diverging from the longitudinal axis. The flange further includes an annular ring coaxial and integral with the hub as well as locking arrangement integral with the tapered surface for mechanically coupling the flange for rotation with a shaft." Referring to Figure 2, the shaft is *12* and the flange is *14* and there is a tapered interface *16* circumscribing shaft proximate to the first shaft *18*. In this case the patent shows the concept of a flange which is connected to a shaft to form an axle wherein the flange includes a first tapered surface extending from the cylindrical surface toward the second annular face and diverging from said longitudinal axis of the shaft which is formed within the flange.

The Creek Patent discloses a flanged tubular axle shaft assembly. Specifically this discloses "a flanged axle shaft assembly includes a shaft having a tubular wall and an open end, a flange hub having a central opening fitted over the shaft and secured to the open end, and wall into compressive engagement with the flange hub opening to provide for transmission of forces between the shaft and the flange hub." There is shown a flange actual shaft assembly *10* which includes a tubular shaft *12* a flange hub *14* mounted on the open outer end *16* of the shaft and an end wedge *18* secured in the open end *16*. The end wedge expands the tubular wall *19* of the shaft into compressive engagement with a central opening *20* and the flange hub *14* to provide a mechanical connection that supports transmission of substantial torsional and axial forces between the shaft and the flange. A portion of the outer end is flared radially outward at 28 to provide an end stop.

The 711 Chen Patent discloses an assembly for a bicycle free-wheel which deals with two opposite securing members *134* and *336* as shown in Figure 1. "Referring to Figures 1-3, a free-wheel for a bicycle rear wheel includes a shaft *12* and a tubular hub member *10* rotatably sleeved around the shaft *12* and having a first and a second end *10*', *10"*. The first end *10'* of the hub member *10* has a ball recess *13* formed thereon. A bearing assembly received in the ball recess *13* includes a ball casing *131*, a ball seat with balls *132*, a dust protector unit *133*, a securing member *134*, a washer unit *135*, and a nut *136*. The downwardly extending flange *14* having a plurality of recesses *141* formed thereon."

The 037 Chen Patent discloses a hub and axle assembly for a bicycle. This was cited because of left and right mounting sleeve members *33*. "Left and right mounting sleeve members *33* are sleeved on the axle *20*. Each of the left and right mounting sleeve members *33* has a curved surrounding race portion *331* which is disposed proximate to and which is spaced apart from a respective one of the left and right surrounding shoulders *111* along an inclined line that forms an acute angle with the axis of the axle *20*, and a surrounding abutment portion *332* opposite to the surrounding race portion *331* and proximate to a respective one of the left and right lateral ends *113*, *114*."

Finally, the Kanehisa Patent which is issued to Shimano, Inc. discloses a bicycle hub axle. Referring to Figure 2, the hub axle nut *46* is hard, rigid one piece unitary member that includes a threaded bore *46a*. The threaded bore *46a* is threadedly engaged with the threaded section *51b* of the shaft portion *51* that secures the bicycle hub axle assembly *31* to the bicycle frame *16*. However, the overall design from Figure 2 as well as Figures 3 is different. It does include the threaded nut but it does not have the concept of the non-round split tapered locking assembly.

There is a significant need to significantly improve the axle with nut and bolt through it so as to improve the torsional strength of the bicycle fork and facilitate ease of the axle installation for bicycles.

### SUMMARY OF THE INVENTION

An embodiment of a first aspect of the present invention relates to a bicycle fork comprising an improved axle with non-round tapered ends affixed into dropouts with openings to match the axle ends through a taper-lock affixation for improving the torsional strength of the fork and facilitate ease of the axle installation. The improved hollow axle consists of a first non-round end with interior female threads connecting an intermediate cylindrical portion which connects a second non-round tapered end, wherein an improved tapered split non-round nut and a cylindrical bolt possessing male threads lock the first end of the axle. The improved tapered split non-round nut has a tapered exterior wall containing a split along an axle axis to comprise an interior non-round surface for the first non-round end of the axle. The axle connects respective dropouts located at the lower end of the fork legs. The respective dropout openings are filled by the improved tapered nut incorporated with the first end of the axle and the second tapered end of the axle, wherein the interior surface of the openings matches exterior surface of the axle ends. The male threaded cylindrical bolt having a round head tightens the improved tapered non-round nut onto the first non-round end of the axle, which results in the split tapered nut being pressed in and self-tightened within the opening of the first dropout, and the second tapered non-round end of the axle is simultaneously pulled in and self tightened within the opening of the second dropout, so that a strong torsional strength of the fork is achieved after the axle is tightly affixed into the bicycle fork. In addition, a variation of the male threaded bolt is disclosed to contain a clamp end which is a rotatable handle which links a non-threaded end of the bolt for use to quickly tighten or release the bolt from the axle.

It has been discovered, according to an embodiment of the present invention, that if a hollow axle for a bicycle fork can be used to affix the respective dropouts of the fork legs, strong torsional strength of the fork and easier installation of the axle can be achieved, wherein said axle comprises a first non-round end connected to an intermediate cylindrical portion, which is further connected to a second tapered non-round end, wherein the first non-round end includes an improved tapered non-round nut having a tapered exterior wall with a split to form an interior surface for the first axle end and a cylindrical bolt having a male threaded end.

It has been further discovered, according to an embodiment of the present invention, that if an improved tapered non-round nut matches a first end of the axle, which is placed into a dropout opening of the fork, the axle can be tightly affixed into the corresponding non-round opening of the fork dropout through a taper-lock affixation, wherein the improved nut comprises a tapered exterior wall with a split to construct an interior non-round surface for the first end of the axle which is driven by a cylindrical bolt having a male threaded end, which is screwed into the first female threaded end of the axle.

It has also been discovered, according to an embodiment of the present invention, that if the interior surface of the first and second dropout openings match the exterior surface of the respective improved tapered non-round nut at the first end and the second tapered non-round end of the axle, the axle can be tightly affixed into the corresponding openings of the fork dropouts through a taper-lock affixation, wherein an improved nut that comprises the tapered exterior wall with a split to construct an interior non-round surface for the first end of the axle is driven by a cylindrical bolt where a male threaded end of the bolt is screwed into a first female threaded end of the axle.

It has additionally been discovered, according to an another preferred embodiment of the present invention, to modify the male threaded cylindrical bolt used with the present invention so that if the bolt at its non-threaded end is linked to a rotatable handle which can rotate around the non-threaded end as the rotational center, then the handle can be used to respectively easily tighten or release the male threaded cylindrical bolt into or out of the axle due to the leverage provided by the handle.

It is therefore desirable to provide a bicycle fork, wherein a hollow axle for a bicycle fork can be used to affix the respective dropouts of the fork legs, to achieve strong torsional strength of the fork and easier installation of the axle can be achieved, wherein said axle comprises a first non-round end connected to an intermediate cylindrical portion, which is further connected to a second tapered non-round end, wherein the first non-round end includes an improved tapered non-round nut having a tapered exterior wall with a split to form an interior surface for the first axle end and a cylindrical bolt having a male threaded end.

It is also desirable to provide an improved tapered non-round nut matches a first end of the axle, which is placed into a dropout opening of the fork, so that the axle can be tightly affixed into the corresponding non-round opening of the fork dropout through a taper-lock affixation, wherein the improved nut comprises a tapered exterior wall with a split to construct an interior non-round surface for the first end of the axle which is driven by a cylindrical bolt having a male threaded end, which is screwed into the first female threaded end of the axle.

It is also desirable to have a design wherein the interior surface of the first and second dropout openings match the exterior surface of the respective improved tapered non-round nut at the first end and the second tapered non-round end of the axle, so that the axle can be tightly affixed into the corresponded openings of the fork dropouts through a taper-lock affixation, wherein the improved nut that comprises tapered exterior wall with a split to construct an interior non-round bore for the first end of the axle is driven by a cylindrical bolt where a male threaded end of the bolt is screwed into the first female threaded end of the axle.

It is also desirable to provide an another preferred embodiment of the male threaded cylindrical bolt, wherein the bolt at its non-threaded end links has a rotatable clamp which is comprised of a rotatable handle which can rotate around the non-threaded end as the rotational center, so that the handle can be used to respectively easily tighten or release the male threaded cylindrical bolt into or out of the axle due to the leverage provided by the handle.

### BRIEF DESCRIPTION OF THE DRAWINGS

Referring particularly to the drawings for the purpose of illustration only and not limitation, there is illustrated:
FIG. 1 is a perspective view of one preferred embodiment of the present invention improved fork axle;
FIG. 2 is an exploded perspective view of one preferred embodiment of the present invention improved fork axle, which further illustrates how the fork axle is installed into a bicycle fork;
FIG. 3A is a perspective view of one preferred embodiment of the present invention improved tapered split non-round nut;
FIG. 3B is a rear view of one preferred embodiment of the present invention improved tapered split non-round nut;
FIG. 3C is a cross-sectional view of one preferred embodiment of the present invention improved tapered split non-round nut;
FIG. 4A is a perspective view of one preferred embodiment of the present invention hollow cylindrical bolt having a round head;
FIG. 4B is a rear view of one preferred embodiment of the present invention hollow cylindrical bolt having a round head;
FIG. 4C is a cross-sectional view of one preferred embodiment of the present invention hallow cylindrical bolt having a round head;
FIG. 5A is a perspective view of one preferred embodiment of the present invention hollow axle body having a first non-round end and second tapered non-round end;
FIG. 5B is a rear view of one preferred embodiment of the present invention hollow axle body having a first non-round end and second tapered non-round end;
FIG. 5C is a cross-sectional view of one preferred embodiment of the present invention hollow axle body having a first non-round end and second tapered non-round end;
FIG. 6 is a front elevational view in partial cross section of one preferred embodiment of the present invention improved axle with non-round tapered end affixed into fork leg dropouts with openings that match the axle ends; and
FIG. 7 is a cross-sectional view of one preferred embodiment of the present invention improved axle with non-round tapered end affixed into fork leg dropouts with openings that match the axle ends taking along line A-A of FIG. 6.
FIG. 8 is a perspective view of a front bicycle fork, which employs the present invention improved axle with non-round tapered end affixed into fork leg dropouts with openings that match the axle ends;
FIG. 9 is a perspective view of another preferred embodiment of the present invention cylindrical bolt having a quick release handle, wherein the handle is rotated to an extended position;
FIG. 10 is a perspective view of another preferred embodiment of the present invention cylindrical bolt having a quick release handle, wherein the handle is rotated to a closed position;
FIG. 11 is a front elevational view in partial cross section of one preferred embodiment of the present invention improved axle with non-round tapered end affixed into fork leg dropouts with openings that match the axle ends, wherein the another preferred embodiment of the cylindrical bolt having a quick release handle is employed;

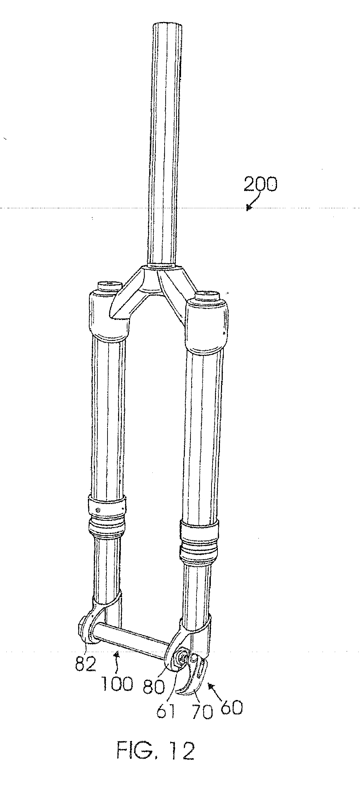

FIG. 12 is a perspective view of a front bicycle fork, which employs the present invention improved axle with non-round tapered end affixed into fork leg dropouts with openings that match the axle ends, wherein the another preferred embodiment of the cylindrical bolt having a quick release handle is employed.

### DETAILED DESCRIPTION OF THE PREFERRED EMBODIMENTS

Although specific embodiments of the present invention will now be described with reference to the drawings, it should be understood that such embodiments are by way of example only and merely illustrative of but a small number of the many possible specific embodiments which can represent applications of the principles of the present invention. Various changes and modifications obvious to one skilled in the art to which the present invention pertains are deemed to be within the spirit, scope and contemplation of the present invention as further defined in the appended claims.

An embodiment of the present invention is an improved fork axle with non-round tapered ends affixed into fork leg dropouts with openings that match the axle ends, which provides a taper-lock affixation to improve the torsional strength of the fork and facilitate ease of axle installation for a bicycle fork.

Referring first to Figure 1, there is illustrated one preferred embodiment of the present invention improved fork axle **100** with non-round tapered ends, comprising an improved tapered split hexagonal nut **10** affixed by a hollow cylindrical bolt **20** with a round head **22** to cover a first end of a hollow axle body **30** having a second distal tapered hexagonal end **32.** It will be appreciated that the hexagonally tapered end is one of the preferred embodiments of the bicycle fork axles with non-round tapered ends of the present invention. In general, any non-round tapered ends including but not limited to triangularly, pentagonally, hexagonally or octagonally tapered ends are within the spirit and scope of the present invention for the bicycle fork axles.

Referring specifically to the exploded perspective view from Figure 2, there is illustrated each component of the present invention improved axle with non-round tapered end affixed into fork leg dropouts with openings that match the axle ends. The improved axle **100** comprises the improved tapered split hexagonal nut **10,** the cylindrical bolt **20 ,** and the axle body **30,** wherein the axle body comprises the first hexagonally shaped end **35,** connected to the intermediate cylindrical portion **31,** which is connected to the second tapered hexagonal end **32.** As further illustrated in Figure 2, a first dropout **80** is located at a lower end of a first fork leg **86,** wherein a first mating opening **81** at the center of the first dropout **80** matches the improved tapered split hexagonal nut **10.** Accordingly, a second dropout **82** is at a lower end of the second fork leg **88,** wherein a second mating opening **83** matches the second tapered end **32** of the axle body.

The improved tapered split hexagonal nut **10** is further illustrated through a perspective view, rear view, and cross section view from respective Figures 3A, 3B and 3C, wherein the nut **10** is comprised of a rear end **16** containing a round opening **18** which is located at the center of the rear end, and an exterior tapered hexagonal wall **12** with a front edge **13** and split **11** which is aligned to an axis of the axle body **30.** The exterior wall **12** further surrounds an interior hexagonal bore **14** possessing an interior hexagonal surface **15,** which is used to surround the first axle end **35** of the hollow axle body.

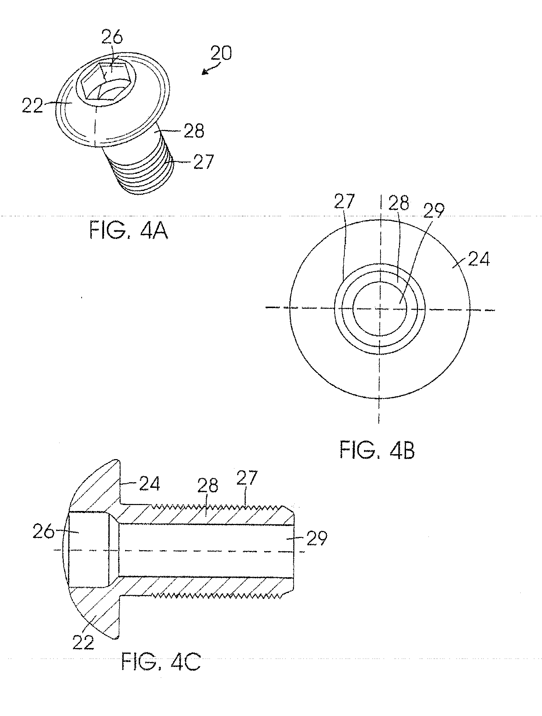

Referring to Figures 4A, 4B, and 4C, there is illustrated hollow cylindrical bolt **20** with the round head **22** through a respective perspective, rear, and cross-sectional view. The hollow bolt **20** has an interior bore **29** which is comprised of a hollow neck **28** containing male threads **27,** which transversely attaches at the center of a rear side **24** of an outer round head **22.** The outer round head **22** is further illustrated at the center to have an interior hexagonal bore **26** with an interior hexagonal surface, from which a force can be applied to fasten the bolt.

Referring to Figures 5A, 5B, and 5C, the hollow axle body **30** as one preferred embodiment of the present invention is illustrated to comprise the second tapered hexagonal end **32** with an exterior surface **33** at a preferred taper angle of 80 degrees, connected to an intermediate hollow cylindrical portion **31,** which is further connected to the first hexagonally shaped end **35,** wherein the first hexagonal end **35** possesses an exterior surface **36,** a front edge **38** and an interior bore **37** containing female threads **39.** In addition, the hollow axle body **30** is specifically illustrated to comprise a shoulder **34,** which is located at the intersection where the hexagonal end **35** joins the intermediate cylindrical portion **31** of the axle. It will be appreciated that, while a hollow structure is preferred for the cylindrical bolt and axle body, a solid bolt and axle body are also within the scope and spirit of the present invention.

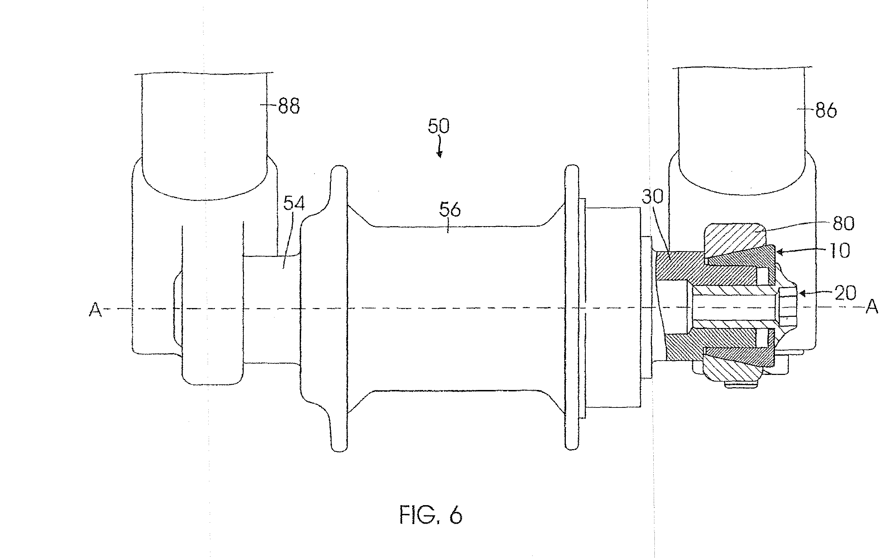

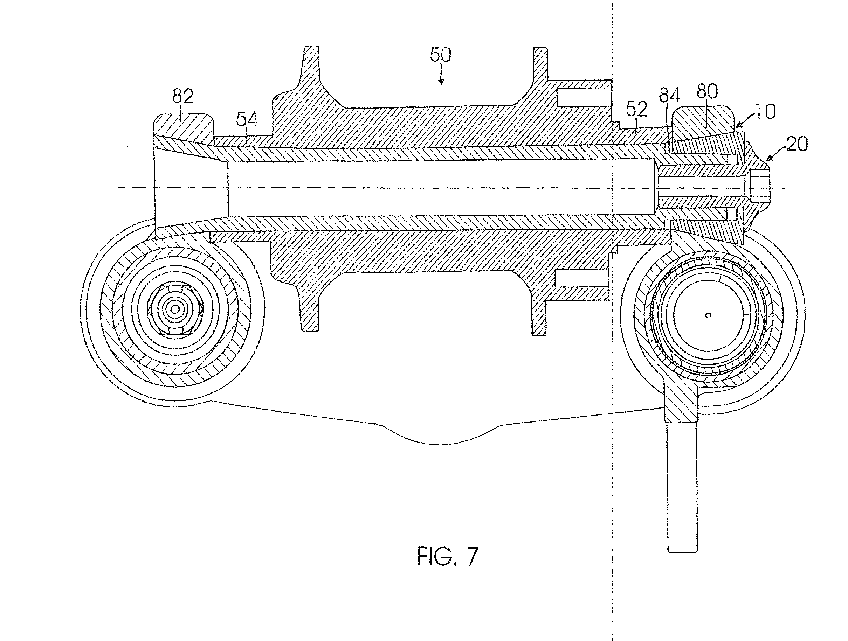

Although in the embodiment shown in Figures 6 and 7 it illustrates the structural configuration of the present invention after installation of the improved axle into the fork leg dropouts with openings that match the axle ends, Figure 7, in addition to Figure 2, is also applicable to illustrate the installation process of the axle **100** into the bicycle fork, wherein Figure 7 is a cross-sectional view taken along line A-A of Figure 6 to illustrate the installation of the axle. As illustrated, the hollow axle body **30** at the first axle end **35** is inserted to extend through second dropout **82** which is affixed at a lower end of a second bicycle fork leg **88,** and a wheel hub **50.** The first axle end **35** is extended into a first dropout **80** which is affixed at a lower end of a first bicycle fork leg **86.** After the improved tapered nut **10** is inserted to cover the first end of the axle body **30,** the improved tapered split hexagonal nut **10** containing the first end **35** of the axle is placed into a mating opening **81** of the first dropout **80,** and the second tapered hexagonal end **32** of the axle is located into a mating opening **83** of the second dropout **82.** It is appreciated from the present invention as shown in Figure 7 that the improved tapered split nut **10** with the exterior tapered hexagonal wall **12** matches a tapered interior hexagonal surface of the mating opening **81** located at the center of the first dropout **80,** and the interior hexagonal surface **15** of the improved nut **10** matches the exterior hexagonal surface **36** of the first axle end 35.

As further illustrated in Figure 7, the hollow cylindrical bolt **20** affixes the improved nut **10** onto the first axle hexagonal end **35** and within the mating opening **81** of the first dropout **80,** wherein the hollow neck **28** of the bolt containing male threads **27** is screwed into the bore **37** containing female threads **39** of the first axle end **35.** It is appreciated from the present invention that some space is arranged between the mating opening and the exterior surface of the improved nut, which includes a space **84** shown in Figure 7, located between the front edge **13** of the hexagonal wall **12** of the improved split hexagonal nut **10** and the shoulder **28** of the axle body **30,** so that an embodiment of the present invention can use the space through a taper-lock affixation to tightly affix the improved split hexagonal nut 10 so that it fills the first dropout **80** of the first fork leg **86.** Because that the split **11** will be slightly compressed within the mating opening **81** under pressure from the cylindrical bolt **20** where the rear end **24** of the bolt **20** presses the rear end **16** of the improved nut **10** to affix into the mating opening **81,** the result is a tight taper-lock affixation between the tapered nut **10** and the mating opening **81,** Accordingly the tapered split hexagonal nut **10** is able to be easily removed after the cylindrical bolt **20** is loosened.

Similarly, the taper-lock affixation also occurs between the second end **32** of the axle body **30** and second dropout **82.** As illustrated in Figure 7, the second tapered hexagonal end **32** of the axle body **30** has the exterior surface **33** which matches the mating opening **83** having the hexagonal interior surface in the second dropout **82,** wherein the second dropout is affixed onto a lower end of the second fork leg **88.** It will be appreciated that the second tapered hexagonal end **32** of the axle will be simultaneously pulled towards and be affixed into the mating opening **83** of the second dropout **82** for a taper-lock affixation, when the cylindrical bolt **20** is screwed into the first axle end **35** of the axle to press the improved split tapered nut **10** into the mating opening **81** of the first dropout **80** for the taper-lock affixation and simultaneously pull the axle body **30** towards the first dropout **80.** Therefore an embodiment of the present invention is able to provide an easy installation of the axle to the bicycle fork through the taper-lock affixation to achieve a strong torsional strength of the bicycle fork.

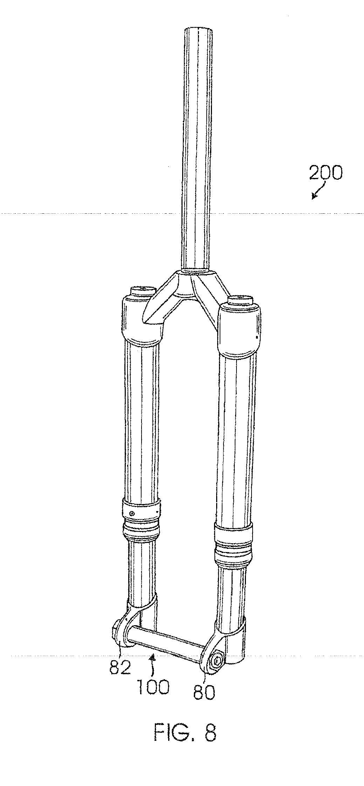

As a further illustrated in Figures 6 and 7, the wheel hub **50** is placed wherein a first and second end sleeve **52** and **54** of the hub are close to the respective first and second dropouts **80** and **82** of the first and second fork legs **86** and **88.** Therefore an intermediate section **56** of the hub is able to transversely accommodate a front wheel of the bicycle. In addition, Figure 8 illustrates a front bicycle fork **200,** which employs the present invention improved axle with non-round tapered ends affixed into dropouts with openings to match the axle ends.

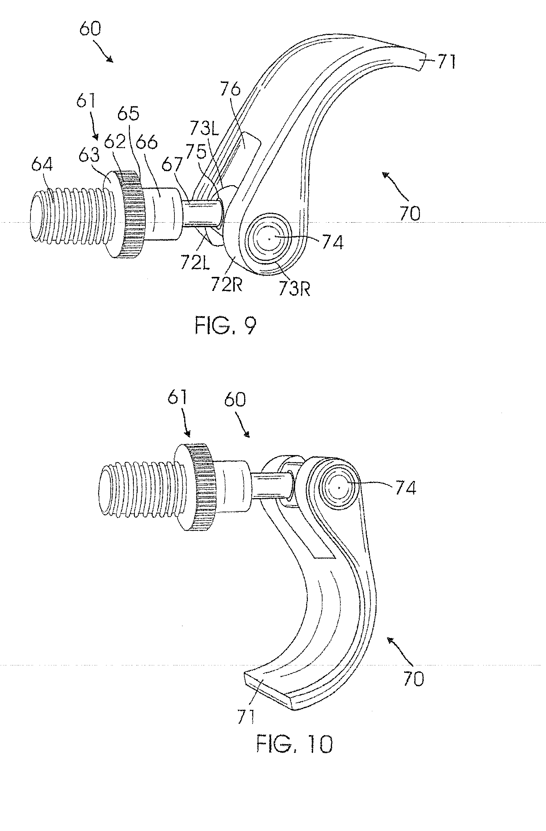

In addition to the preferred embodiment for the hollow cylindrical bolt 20 illustrated in Figures 4A, 4B and 4C, another preferred embodiment of the present invention can provide a variation of the male threaded bolt 20, which is illustrated in Figures 9 and 10. This alternative preferred embodiment 60 is a rotatable clamp which includes a male threaded cylindrical bolt 61 connected to a rotatable handle 70 to facilitate ease of the axle installation. The male threaded cylindrical bolt 61 comprises a threaded end 64, a non-threaded shoulder 66, a transverse disc member 62 having a first and second ring surface 63 and 65 which joins the threaded portion 64 and non-threaded portion 66 of the male threaded bolt 61, and a round connecting rod 67 coaxially affixed onto the non-threaded end 66 of the threaded bolt 61. The rotatable handle 70 is a curved apparatus, comprising a bottom end 71, and a head wherein an opening 76 divides the head into a symmetrical right portion 72R and a left portion 72L. A transverse round rod 74 is rotatably connected to the right and left portions 72R and 72L of the handle 70 through a respective hole 73R and 73L located in the right and left portion 72R and 72L of the head. As further illustrated, the transverse round rod 74 at its center position 75 is perpendicularly affixed to the round connecting rod 67. It will be appreciated that the handle 70 is rotatable around the transverse round rod 74 as the center of rotation. The handle 70 is rotated to an extended position, which is illustrated in Figure 9, and the handle 70 is at a closed position as illustrated in Figure 10.

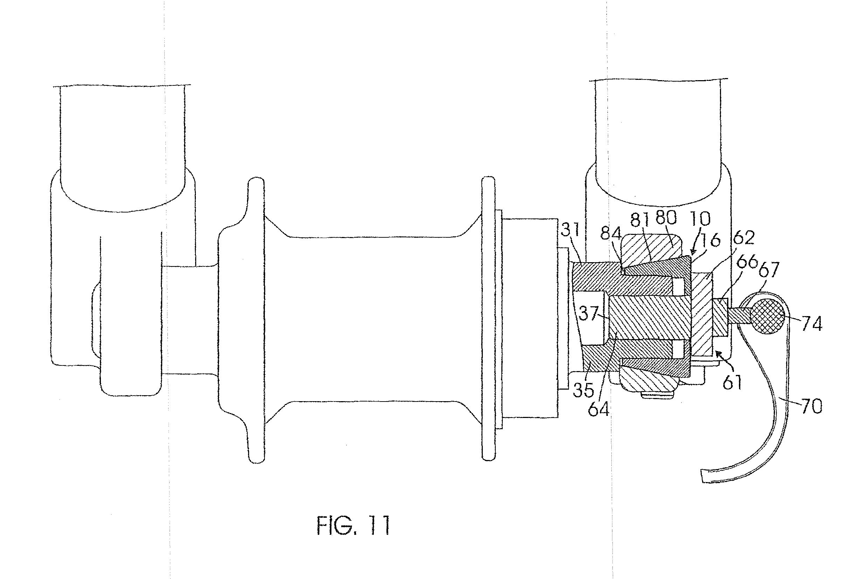

Referring to Figure 11, the male threaded bolt 61 is connected to the handle 70 so as to affix the improved nut 10 into the first axle hexagonal end 35 and within the mating opening 81 of the first dropout 80, wherein the male threaded end 64 of the bolt 61 is screwed into the bore 37 containing female threads of the first axle end 35. It will be appreciated that during the affixation process, the improved nut 10 at its outer surface 16 is pressed by the bolt 61 with the disc member 62 into the mating opening 81 of the first dropout 80, wherein the bolt 61 which is connected to the handle 70 is rotated to threadedly connect the threaded head 35 of the axle. It will be appreciated that with the aid of the handle 70 which can provide the leverage to overcome a threading resistance, the male threaded bolt 61 can be easily tightened or released. Figure 13 illustrates this alternative embodiment 60 of the male threaded bolt 61 connected to the rotatable handle 70 as it is affixed to the front bicycle fork 200.

Defined in detail, an embodiment of the present invention is an improved axle which is used to be affixed into dropouts of a bicycle fork leg, comprising: (a) a tapered split non-round nut having a rear end with a round opening located at a center of the rear end, an exterior tapered non-round wall with a front edge and having a split extending from the front edge to the rear end, the exterior wall defining an interior non-round bore having an interior non-round surface; (b) a hollow cylindrical bolt with an outer round head comprising a hollow neck containing male threads, the hollow neck transversely attached at a center location of a rear side of the outer round head, the outer round head having an interior hexagonal bore with an interior hexagonal surface; (c) a hollow axle body comprising a first non-round shaped end connected to an intermediate hollow cylindrical portion which in turn is connected to a second tapered non-round end with an exterior surface, the first non-round end having an exterior non-round surface, a front edge and an interior bore containing female threads, the hollow axle body comprising a shoulder located at the intersection of the intermediate hollow cylindrical portion and the first non-round end, the exterior non-round surface of the first non-round end matching the interior non-round surface of the bore of the tapered split non-round nut; (d) a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second tapered non-round end of said axle body; and (e) the improved axle affixed into the dropouts of the fork legs by having the improved axle inserted into second dropout so that the second tapered non-round end of the axle body is inserted into and matches the mating opening of the second dropout and the first non-round end of the improved axle is inserted through the mating opening of the first dropout and the split non-round nut is positioned over the first non-round end of the axle and tightened thereto by threading the hollow bolt into the threads in the first non-round end, the tapered split non-round nut being tightened into the first dropout opening while the tapered second end of the axle is pulled into said second mating opening when said cylindrical bolt is threaded into said first end of the axle.

Defined more broadly, an embodiment of the present invention is an improved axle which is used to be affixed into dropouts of a bicycle fork leg, comprising: (a) a tapered split non-round nut having a rear end with an opening to receive a threaded bolt, an exterior tapered non-round wall with a front edge and having a split extending from the front edge to the rear end, the exterior wall defining an interior bore; (b) a cylindrical bolt with an outer head and having neck containing male threads, the neck transversely attached at a rear side of the head, the head having driving means therein; (c) an axle body comprising a first end connected to an intermediate cylindrical portion which in turn is connected to a second non-round end with an exterior surface, the first end having an exterior surface, a front edge and an interior bore containing female threads, the first end received within the tapered split non-round nut; (d) a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second tapered non-round end of said axle body; and (e) the improved axle affixed into the dropouts of the fork legs by having the improved axle inserted into second dropout so that the second tapered non-round end of the axle body is inserted into and matches the mating opening of the second dropout and the first end of the improved axle is inserted through the mating opening of the first dropout and the split non-round nut is positioned over the first end of the axle and tightened thereto by threading the bolt into the threads in the first end, the tapered split non-round nut being tightened into the first dropout opening while the tapered second end of the axle is pulled into said second mating opening when said cylindrical bolt is threaded into said first end of the axle.

Defined even more broadly, an embodiment of the present invention is an improved axle which is used to be affixed into dropouts of a bicycle fork leg, comprising: (a) a tapered split non-round nut having a rear end with an opening to receive a first mating fastening means, an exterior tapered non-round wall with a front edge and having a split extending from the front edge to the rear end, the tapered split-non-round nut having an interior bore; (b) a mating fastening means; (c) an axle body comprising a first end connected to an intermediate portion which in turn is connected to a second non-round end with an exterior surface, the first end having an exterior surface and a second mating fastening means, the first end received within the bore of tapered split non-round nut; (d) a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second tapered non-round end of said axle body; and (e) the improved axle affixed into the dropouts of the fork legs by having the improved axle inserted into second dropout so that the second tapered non-round end of the axle body is inserted into and matches the mating opening of the second dropout and the first end of the improved axle is inserted through the mating opening of the first dropout and the split non-round nut is positioned over the first end of the axle and tightened thereto by fastening the first and second mating fasting means together, the tapered split non-round nut being tightened into the first dropout opening while the tapered second end of the axle is pulled into said second mating opening.

Defined even more broadly, an embodiment of the present invention is an improved axle which is used to be affixed into dropouts of a bicycle fork leg, comprising: (a) a tapered split non-round nut having a rear end with an opening to receive a first mating fastening means, an exterior tapered non-round wall with a front edge and having a split extending from the front edge to the rear end, the tapered split-non-round nut having an interior bore; (b) a mating fastening means; (c) an axle body comprising a first end connected to an intermediate portion which in turn is connected to a second end with an exterior surface, the first end having an exterior surface and a second mating fastening means, the first end received within the bore of tapered split non-round nut; (d) a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second end of said axle body; and (e) the improved axle affixed into the dropouts of the fork legs by having the improved axle inserted into second dropout so that the second end of the axle body is inserted into and matches the mating opening of the second dropout and the first end of the improved axle is inserted through the mating opening of the first dropout and the split non-round nut is positioned over the first end of the axle and tightened thereto by fastening the first and second mating fasting means together, the tapered split non-round nut being tightened into the first dropout opening while the second end of the axle is pulled into said second mating opening.

Defined even more broadly, an embodiment of the present invention is an improved axle which is used to be affixed into dropouts of a bicycle fork, comprising: (a) an improved axle comprising a tapered split non-round nut including an exterior tapered non-round wall with a split and having an interior bore and means for receiving a bolt, a bolt including a neck containing male threads, an axle body including a first end and a second tapered non-round end, wherein the first end includes an interior bore containing female threads, said first end matches the interior bore of the tapered split non-round nut; (b) a first and second dropout containing a respective first and second mating opening, said first mating opening matches said exterior wall of the tapered split non-round nut, said second mating opening matches said second tapered non-round end of said axle body; and (c) the improved axle is affixed into the dropouts so that the second tapered non-round end is affixed into the mating second dropout and the tapered split non-round nut is positioned over the first end of the axle and is tightened by threading the threaded bolt into the female threads of the first axle end so that the tapered non-rod split nut is tightened into the mating first dropout.

Defined most broadly, an embodiment of the present invention is an improved axle which is used to be affixed into dropouts of a bicycle fork, comprising: (a) an improved axle comprising a tapered split non-round nut including an exterior tapered non-round wall with a split and having an interior bore and means for receiving a first fastening means, a first fastening means, an axle body including a first end and a second end, wherein the first end includes a mating second fastening means, said first end matches the interior bore of the tapered split non-round nut; (b) a first and second dropout containing a respective first and second mating opening, said first mating opening matches said exterior wall of the tapered split non-round nut, said second mating opening matches said second end of said axle body; and (c) the improved axle is affixed into the dropouts so that the second end is affixed into the mating second dropout and the tapered split non-round nut is positioned over the first end of the axle and is tightened by the mating fastening means so that the tapered non-rod split nut is tightened into the mating first dropout.

Of course the present invention is not intended to be restricted to any particular form or arrangement, or any specific embodiment, or any specific use, disclosed herein, since the same may be modified in various particulars or relations without departing from the spirit or scope of the claimed invention hereinabove shown and described of which the apparatus or method shown is intended only for illustration and disclosure of an operative embodiment and not to show all of the various forms or modifications in which this invention might be embodied or operated.

## Claims

1. An improved axle which is used to be affixed into dropouts of a bicycle fork leg, comprising:
a. a tapered split non-round nut having a rear end with a round opening located at a center of the rear end, an exterior tapered non-round wall with a front edge and having a split extending from the front edge to the rear end, the exterior wall defining an interior non-round bore having an interior non-round surface;
b. a hollow cylindrical bolt with an outer round head comprising a hollow neck containing male threads, the hollow neck transversely attached at a center location of a rear side of the outer round head, the outer round head having an interior hexagonal bore with an interior hexagonal surface;
c. a hollow axle body comprising a first non-round shaped end connected to an intermediate hollow cylindrical portion which in turn is connected to a second tapered non-round end with an exterior surface, the first non-round end having an exterior non-round surface, a front edge and an interior bore containing female threads, the hollow axle body comprising a shoulder located at the intersection of the intermediate hollow cylindrical portion and the first non-round end, the exterior non-round surface of the first non-round end matching the interior non-round surface of the bore of the tapered split non-round nut;
d. a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second tapered non-round end of said axle body; and
e. the improved axle affixed into the dropouts of the fork legs by having the improved axle inserted into second dropout so that the second tapered non-round end of the axle body is inserted into and matches the mating opening of the second dropout and the first non-round end of the improved axle is inserted through the mating opening of the first dropout and the split non-round nut is positioned over the first non-round end of the axle and tightened thereto by threading the hollow bolt into the threads in the first non-round end, the tapered split non-round nut being tightened into the first dropout opening while the tapered second end of the axle is pulled into said second mating opening when said cylindrical bolt is threaded into said first end of the axle.

2. The improved axle in accordance with Claim 1, wherein said hollow cylindrical bolt further comprises a male threaded bolt connected to a rotatable handle for ease of the axle installation, said male threaded bolt having of a threaded end connected to a transverse disc member which further connects to a non-threaded shoulder which is coaxially affixed to a round connecting rod with a rotatable handle having an end and a head containing an opening to divide the head into a symmetrical right portion and a left portion, a transverse round rod rotatably connected to the right and left portion of the head of the handle, the round transverse rod at its center position perpendicularly affixed to the round connecting rod of the bolt.

3. An improved axle which is used to be affixed into dropouts of a bicycle fork leg, comprising:
a. a tapered split non-round nut having a rear end with an opening to receive a threaded bolt, an exterior tapered non-round wall with a front edge and having a split extending from the front edge to the rear end, the exterior wall defining an interior bore;
b. a cylindrical bolt with an outer head and having neck containing male threads, the neck transversely attached at a rear side of the head, the head having driving means therein;
c. an axle body comprising a first end connected to an intermediate cylindrical portion which in turn is connected to a second non-round end with an exterior surface, the first end having an exterior surface, a front edge and an interior bore containing female threads, the first end received within the tapered split non-round nut;
d. a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second tapered non-round end of said axle body; and
e. the improved axle affixed into the dropouts of the fork legs by having the improved axle inserted into second dropout so that the second tapered non-round end of the axle body is inserted into and matches the mating opening of the second dropout and the first end of the improved axle is inserted through the mating opening of the first dropout and the split non-round nut is positioned over the first end of the axle and tightened thereto by threading the bolt into the threads in the first end, the tapered split non-round nut being tightened into the first dropout opening while the tapered second end of the axle is pulled into said second mating opening when said cylindrical bolt is threaded into said first end of the axle.

4. The improved axle in accordance with Claim 3, wherein said cylindrical bolt further comprises a rotatable clamp mechanism by which the bolt can be quickly tightened or released.

5. An improved axle which is used to be affixed into dropouts of a bicycle fork leg, comprising:
a. a tapered split non-round nut having a rear end with an opening to receive a first mating fastening means, an exterior tapered non-round wall with a front edge and having a split extending from the front edge to the rear end, the tapered split-non-round nut having an interior bore;
b. a mating fastening means;
c. an axle body comprising a first end connected to an intermediate portion which in turn is connected to a second non-round end with an exterior surface, the first end having an exterior surface and a second mating fastening means, the first end received within the bore of tapered split non-round nut;
d. a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second tapered non-round end of said axle body; and
e. the improved axle affixed into the dropouts of the fork legs by having the improved axle inserted into second dropout so that the second tapered non-round end of the axle body is inserted into and matches the mating opening of the second dropout and the first end of the improved axle is inserted through the mating opening of the first dropout and the split non-round nut is positioned over the first end of the axle and tightened thereto by fastening the first and second mating fasting means together, the tapered split non-round nut being tightened into the first dropout opening while the tapered second end of the axle is pulled into said second mating opening.

6. An improved axle which is used to be affixed into dropouts of a bicycle fork leg, comprising:
a. a tapered split non-round nut having a rear end with an opening to receive a first mating fastening means, an exterior tapered non-round wall with a front edge and having a split extending from the front edge to the rear end, the tapered split-non-round nut having an interior bore;
b. a mating fastening means;
c. an axle body comprising a first end connected to an intermediate portion which in turn is connected to a second end with an exterior surface, the first end having an exterior surface and a second mating fastening means, the first end received within the bore of tapered split non-round nut;
d. a first dropout containing a first mating opening, wherein said first dropout is affixed at a lower end of a first bicycle fork leg, a second dropout containing a second mating opening, wherein the second dropout is affixed at a lower end of a second bicycle fork leg, said first mating opening matches said exterior wall of the tapered split non-round nut, said second mating opening matches said exterior surface of the second end of said axle body; and
e. the improved axle affixed into the dropouts of the fork legs by having the improved axle inserted into second dropout so that the second end of the axle body is inserted into and matches the mating opening of the second dropout and the first end of the improved axle is inserted through the mating opening of the first dropout and the split non-round nut is positioned over the first end of the axle and tightened thereto by fastening the first and second mating fasting means together, the tapered split non-round nut being tightened into the first dropout opening while the second end of the axle is pulled into said second mating opening.

7. The improved axle in accordance with Claim 5 or 6, wherein said mating fastening means further comprises a rotatable clamp mechanism by which the mating fastening means can be quickly tightened or released.

8. An improved axle which is used to be affixed into dropouts of a bicycle fork, comprising:
a. an improved axle comprising a tapered split non-round nut including an exterior tapered non-round wall with a split and having an interior bore and means for receiving a bolt, a bolt including a neck containing male threads, an axle body including a first end and a second tapered non-round end, wherein the first end includes an interior bore containing female threads, said first end matches the interior bore of the tapered split non-round nut;
b. a first and second dropout containing a respective first and second mating opening, said first mating opening matches said exterior wall of the tapered split non-round nut, said second mating opening matches said second tapered non-round end of said axle body; and
c. the improved axle is affixed into the dropouts so that the second tapered non-round end is affixed into the mating second dropout and the tapered split non-round nut is positioned over the first end of the axle and is tightened by threading the threaded bolt into the female threads of the first axle end so that the tapered non-rod split nut is tightened into the mating first dropout.

9. The improved axle in accordance with Claim 8, wherein said bolt further comprises a handle to facilitate rapid tightening and release of the bolt.

10. An improved axle which is used to be affixed into dropouts of a bicycle fork, comprising:
a. an improved axle comprising a tapered split non-round nut including an exterior tapered non-round wall with a split and having an interior bore and means for receiving a first fastening means, a first fastening means, an axle body including a first end and a second end, wherein the first end includes a mating second fastening means, said first end matches the interior bore of the tapered split non-round nut;
b. a first and second dropout containing a respective first and second mating opening, said first mating opening matches said exterior wall of the tapered split non-round nut, said second mating opening matches said second end of said axle body; and
c. the improved axle is affixed into the dropouts so that the second end is affixed into the mating second dropout and the tapered split non-round nut is positioned over the first end of the axle and is tightened by the mating fastening means so that the tapered non-rod split nut is tightened into the mating first dropout.

11. The improved axle in accordance with any preceding Claim, wherein the shape of the exterior tapered non-round wall of the split non-round nut and the matching shape of the mating opening in the first dropout is selected from the group comprising hexagonal, triangular, pentagonal and octagonal in shape.

12. The improved axle in accordance with any one of Claims 1 to 5, 8 or 9, or Claim 11 when read as appended to any one of Claims 1 to 5, 8 or 9, wherein the shape of the second tapered non-round end of the axle body and the matching shape of the mating opening in the second dropout is selected from the group comprising hexagonal, triangular, pentagonal and octagonal in shape.

13. The improved axle in accordance with Claim 10, wherein said first fastening means further comprising a handle for ease of the axle installation.
